# EUROPEAN PATENT APPLICATION

(11) **EP 4 760 858 A1**
(43) Date of publication of application: **17.06.2026**
(21) Application number: 25222084.3
(22) Date of filing: 10.12.2025
(51) Int. Cl.: H01M 10/42, H01M 10/48, H01M 10/63

(54) **METHOD AND APPARATUS FOR MONITORING FIRE IN BATTERY**

(30) Priority: 12.12.2024 KR 20240185261
(71) Applicant: SAMSUNG SDI CO., LTD., Yongin-si, Gyeonggi-do 17084 (KR)
(72) Inventor: SEOL, Junha, 17084 Yongin-si, Gyeonggi-do (KR)
(74) Representative: Gulde & Partner

(57) **Abstract**

A method and apparatus for monitoring a fire in a battery. The method of monitoring a fire in a battery includes: obtaining a temperature of a battery module; comparing a temperature change amount of the battery module with a reference temperature change amount during a reference time, if the temperature of the battery module reaches a predetermined temperature setting value; changing the reference time or the reference temperature change amount, if the temperature change amount is less than the reference temperature change amount; and disconnecting a connection between the battery module and a load, if the temperature change amount is equal to or greater than the reference temperature change amount.

## Description

### CROSS-REFERENCE TO RELATED APPLICATION

This application claims priority to and the benefit of Korean Patent Application No. 10-2024-0185261 filed on December 12, 2024, in the Korean Intellectual Property Office.

### BACKGROUND

### (a) Field

The present disclosure relates to a method and apparatus for monitoring a fire in a battery.

### (b) Description of Related Art

A lithium ion battery cell includes an electrode assembly including a cathode, an anode, and a separator interposed between the cathode and the anode, a case accommodating the electrode assembly, and electrode terminals electrically connected to the electrode assembly. The electrolyte is injected into the case, and charging and discharging of the battery cell are performed through electrochemical reactions between the cathode, the anode, and the electrolyte solution.

Repeated charging and discharging of lithium-ion battery cells may cause dendrites to develop, and the separator inside the battery cell may be damaged due to external temperature and exposure to external environment. Internal short circuits may be triggered, resulting in thermal runaway and potential fire.

In the event a thermal runaway occurs, the temperature of the battery cell may increase. Accordingly, there is a need to prevent fires from occurring, even in the vent internal short circuits and overheating occur.

### SUMMARY

Embodiments of the present disclosure provide a method and apparatus for monitoring a fire in a battery capable of preventing the fire in the battery.

Embodiments of the present disclosure provide a method of monitoring a fire in a battery. The method of monitoring a fire in a battery includes: receiving a temperature of a battery module; comparing a temperature change amount of the battery module with a reference temperature change amount during a reference time, if the temperature of the battery module reaches a temperature setting value; changing at least one of the reference time and the reference temperature change amount, if the temperature change amount of the battery module during the reference time is less than the reference temperature change amount; and disconnecting a connection between the battery module and a load if the temperature change amount of the battery module during the reference time is greater than or equal to the reference temperature change amount.

Embodiments of the present disclosure provide a method of monitoring a fire in a battery including: obtaining a temperature of a battery module; comparing a temperature change amount of the battery module with a reference temperature change amount during a reference time, if the temperature of the battery module reaches a predetermined temperature setting value; changing the reference time and/or the reference temperature change amount, if the temperature change amount is less than the reference temperature change amount; and disconnecting a connection between the battery module and a load, if the temperature change amount is equal to or greater than the reference temperature change amount.

In some embodiments, the comparing may include setting the reference time and/or the reference temperature change amount according to the time at which the temperature of the battery module reaches the temperature setting value. This enhances handling of the fire risk, e.g., by an adaptive response thereto.

In some embodiments, the comparing includes setting the reference time and/or the reference temperature change amount according to a time the temperature of the battery module reaches the predetermined temperature setting value. This enhances handling of the fire risk, e.g., by an adaptive response thereto.

In some embodiments, the setting may include setting the reference temperature change amount with respect to the reference time if the time at which the temperature of the battery module reaches the temperature set value (also referred as to temperature setting value) is a first time, to be greater than the reference temperature change amount with respect to the reference if the time at which the temperature of the battery module reaches the temperature set value is a second time longer than the first time. This enhances handling of the fire risk, e.g., by an adaptive response thereto.

In some embodiments, the time inversely corresponds to a ratio of the reference temperature change amount to the reference time. This enhances handling of the fire risk, e.g., by an adaptive response thereto.

In some embodiments, the setting may include determining the reference time and/or the reference temperature change amount by referring to a first table in which a reference time and a temperature change amount corresponding to each time at which the temperature of the battery module reaches the temperature set value are stored, and the reference temperature change amount with respect to the reference time stored in the first table may be set to be larger the shorter the time at which the temperature of the battery module reaches the temperature set value. This enhances handling of the fire risk, e.g., by a predetermined response thereto.

In some embodiments, the setting includes determining the reference time and the reference temperature change amount by referring to a first table storing the reference time and the temperature change amount corresponding to each time the temperature of the battery module reaches the predetermined temperature set value, and wherein a ratio of the reference temperature change amount to the reference time stored in the first table inversely corresponds to the time the temperature of the battery module reaches the predetermined temperature set value. This enhances handling of the fire risk, e.g., by a predetermined response thereto.

In some embodiments, the changing may include determining the reference time and the reference temperature change amount based on the temperature change amount of the battery module during the reference time. This enhances handling of the fire risk, e.g., by a predetermined response thereto.

In some embodiments, the determining may include determining the reference time and the reference temperature change amount by referring to a second table storing a reference time and/or a reference temperature change amount corresponding to each temperature change amount of the battery module during the reference time, and the reference temperature change amount with respect to the reference time in the second table may be set to be larger, as the temperature change amount of the battery module with respect to the reference time is larger. This enhances handling of the fire risk, e.g., by a predetermined response thereto.

In some embodiments, the determining includes determining the reference time and/or the reference temperature change amount by referring to a second table storing the reference time and the reference temperature change amount corresponding to each temperature change amount of the battery module during the reference time, and wherein a ratio of the reference temperature change amount to the reference time in the second table corresponds to a ratio of the temperature change amount of the battery module to the reference time. This enhances handling of the fire risk, e.g., by a predetermined response thereto.

In some embodiments, the determining may include increasing the reference time by a set time or decreasing the reference temperature change amount by a set value based on the temperature change amount of the battery module during the reference time. This enhances handling of the fire risk, e.g., by an adaptive response thereto.

According to various embodiments, a controller may include one or more processors configured (e.g., by code segments) to perform the method as detailed herein.

According to various embodiments, a computer program (e.g., implemented by code segments) may be configured, when being executed by one or more processors, to cause the one or more processors to perform the method as detailed herein.

According to various embodiments, a storage medium (e.g., memory or storage device) may store instructions (e.g., implemented by code segments) configured, when being executed by one or more processors, to cause the one or more processors to perform the method as detailed herein.

Embodiments of the present disclosure provide an apparatus for monitoring a fire in a battery. The apparatus for monitoring a fire in a battery includes: a temperature sensor configured to measure a temperature of a battery module; and a controller configured to perform a fire monitoring by comparing a temperature change amount of the battery module during a reference time with a reference temperature change amount if the temperature of the battery module reaches a temperature setting value, and change at least one of the reference time and the reference temperature change amount based on the temperature change amount of the battery module during the reference time.

Embodiments of the present disclosure provide an apparatus for monitoring a fire in a battery including: a temperature sensor configured to measure a temperature of a battery module; and a controller configured to perform fire monitoring, wherein the fire monitoring compares a temperature change amount of the battery module during a reference time with a reference temperature change amount, if the temperature of the battery module reaches a predetermined temperature setting value, and wherein the fire monitoring changes the reference time or the reference temperature change amount based on the temperature change amount during the reference time.

In some embodiments, the controller may be configured to set the reference time and/or the reference temperature change amount based on the time at which the temperature of the battery module reaches the temperature set value.

In some embodiments, the controller is configured to set the reference time and/or the reference temperature change amount based on a time the temperature of the battery module reaches the predetermined temperature set value.

In some embodiments, the apparatus for monitoring a fire in a battery may further include a storage device configured to comprise a first table in which a reference time and/or a temperature change amount are stored corresponding to each time at which the temperature of the battery module reaches the temperature set value, wherein the controller may be configured to set the reference time and/or the reference temperature change amount from the time at which the temperature of the battery module reaches the temperature set value by referring to the first table.

In some embodiments, the apparatus further includes: a storage device including a first table storing the reference time and/or the temperature change amount corresponding to each time the temperature of the battery module reaches the predetermined temperature set value, wherein the controller is configured to set the reference time and/or the reference temperature change amount from the time at which the temperature of the battery module reaches the predetermined temperature set value by referring to the first table.

In some embodiments, the reference temperature change amount with respect to the reference time stored in the first table may be set to be larger, as the time at which the temperature of the battery module reaches the temperature set value is shorter.

In some embodiments, the reference temperature change amount with respect to the reference time stored in the first table inversely corresponds to the time at which the temperature of the battery module reaches the predetermined temperature set value.

In some embodiments, the controller may be configured to change at least one of the reference time and the reference temperature change amount based on the temperature change amount of the battery module during the reference time if the temperature change amount of the battery module during the reference time is less than the reference temperature change amount.

In some embodiments, the controller is configured to change the reference time and/or the reference temperature change amount based on the temperature change amount of the battery module during the reference time, if the temperature change amount of the battery module during the reference time is less than the reference temperature change amount.

In some embodiments, the apparatus for monitoring a fire in a battery may further include a storage device configured to comprise a second table storing a reference time and/or a reference temperature change amount corresponding to each temperature change amount of the battery module during the reference time, wherein the controller may be configured to change at least one of the reference time and the reference temperature change amount to a reference time and/or a reference temperature change amount corresponding to the temperature change amount of the battery module during the reference time by referring to the second table.

In some embodiments, the apparatus further includes: a storage device including a second table storing the reference time and/or the reference temperature change amount corresponding to each temperature change amount of the battery module during the reference time, wherein the controller is configured to change the reference time or the reference temperature change amount corresponding to the temperature change amount of the battery module during the reference time by referring to the second table.

In some embodiments, the reference temperature change amount with respect to the reference time of the second table may be set to be larger, as the temperature change amount of the battery module with respect to the reference time is larger.

In some embodiments, the reference temperature change amount with respect to the reference time of the second table corresponds to the temperature change amount of the battery module with respect to the reference time.

In some embodiments, the controller may be configured to disconnect a connection between the battery module and a load if the temperature change amount of the battery module during the reference time is greater than or equal to the reference temperature change amount.

In some embodiments, the controller is configured to disconnect a connection between the battery module and a load, if the temperature change amount of the battery module during the reference time is equal to or greater than the reference temperature change amount.

### BRIEF DESCRIPTION OF THE DRAWINGS

The drawings illustrate embodiments of the present disclosure, and further describe aspects and features of the present disclosure along with the detailed description of the present disclosure. Thus, the present disclosure should not be construed as being limited to the drawings.
FIG. 1 is a schematic diagram showing a battery pack according to embodiments of the present disclosure.
FIG. 2 is a flow chart showing a fire monitoring method according to embodiments of the present disclosure.
FIG. 3 is a flowchart showing an operation method of the controller in the fire monitoring mode according to embodiments of the present disclosure.
FIG. 4 is a schematic diagram showing a battery fire monitoring apparatus according to embodiments of the present disclosure.
FIG. 5 is a schematic diagram illustrating an energy storage system including the battery pack illustrated in FIG. 1 according to embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

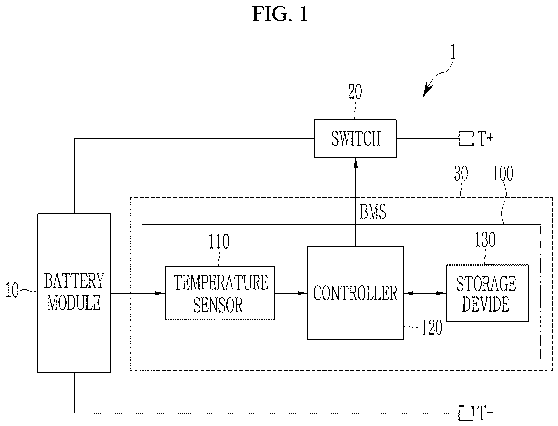

FIG. 1 is a schematic diagram showing a battery pack.

Referring to FIG. 1, a battery pack 1 may include at least one battery module 10, a switch 20, and a battery management system (BMS) 30.

The battery pack 1 may be connected to an external charging device or a load via terminals T+ and T-, and may be charged by the external charging device and discharged by the load.

The battery module 10 may include a plurality of battery cells electrically connected to each other or one another in series and/or in parallel.

The switch 20 may control current paths during charging and discharging of the battery module 10. Closing and opening of the switch 20 may be controlled according to a switch control signal supplied from the BMS 30.

The BMS 30 may control and manage the overall operation of the battery pack 1. The BMS 30 may monitor the overall status of the battery module 10 and the battery cells included in the battery module 10, and perform various control functions to adjust the status of the battery module 10 and the battery cells included in the battery module 10. For example, the BMS 30 may monitor a voltage and current of the battery module 10, control charging and discharging of the battery module 10, and perform cell balancing operations. The BMS 30 may monitor the temperature of the battery module 10 and control the temperature of the battery module 10 by cooling, ventilating, or changing the charging speed, if necessary, and may cut off the connection between the battery module 10 and the load through the switch 20 to prevent fire.

According to an embodiment, the BMS 30 may include a battery fire monitoring apparatus 100 that performs a battery fire monitoring operation based on the temperature of the battery module 10. The battery fire monitoring apparatus 100 may include at least one temperature sensor 110, a controller 120, and a storage device 130.

The temperature sensor 110 may measure the temperature of the battery module 10. In some embodiments, a temperature sensor 110 may be attached to the battery module 10 and may measure the temperature of the battery module 10. In some embodiments, a temperature sensor 110 may be located on the board (substrate) of a BMS 30 mounted on a battery pack 1 and may measure an ambient temperature of the battery module 10.

The temperature of the battery module 10 measured by the temperature sensor 110 may be transmitted to the controller 120.

The temperature sensor 110 may measure the temperature of the battery module 10 at set intervals according to the control of the controller 120 and output the measured temperature to the controller 120.

The controller 120 may perform a battery fire monitoring operation based on the temperatures of the battery module 10 measured by the temperature sensor 110. The controller 120 may store the temperatures of the battery module 10 measured by the temperature sensor 110 in the storage device 130.

In normal mode, the controller 120 may switch to fire monitoring mode if the temperature of the battery module 10 reaches a predetermined temperature setting value. In addition, in the fire monitoring mode, the controller 120 may switch to the normal mode if a set condition is satisfied using the temperature of the battery module 10.

In normal mode, the controller 120 may determine whether the temperature of the battery module 10 reaches the predetermined temperature setting value.

In the fire monitoring mode, the controller 120 may determine whether there is a high risk of fire from the temperature of the battery module 10, and may cut off the connection between the battery module 10 and the load to prevent fire if it is determined there is a high risk of fire. For example, if there is a high risk of fire, the controller 120 may open the switch 20 between the battery module 10 and the load.

In the fire monitoring mode, the controller 120 may determine a reference time and reference temperature change amount to be initially applied in the fire monitoring mode based on the time at which the temperature of the battery module 10 reaches the predetermined temperature setting value in the normal mode.

In the fire monitoring mode, the controller 120 may monitor the temperature of the battery module 10 and check whether the temperature change amount of the battery module 10 is equal to or greater than the reference temperature change amount during the reference time. If the temperature change amount of the battery module 10 during the reference time is greater than the reference temperature change amount, the controller 120 may determine that there is a high risk of fire and may cut off the connection between the battery module 10 and the load.

In the fire monitoring mode, the controller 120 may change the reference time and reference temperature change amount if the temperature change amount of the battery module 10 during the reference time is less than the reference temperature change amount. If the temperature change amount of the battery module 10 during the reference time is greater than the changed reference temperature change amount, the controller 120 may determine that there is a high risk of fire and may cut off the connection between the battery module 10 and the load.

In the fire monitoring mode, the controller 120 may change the reference time and reference temperature change amount if the temperature change amount of the battery module 10 during the changed reference time is less than the changed reference temperature change amount.

In this manner, in the fire monitoring mode, the controller 120 may perform fire monitoring while changing the reference time and reference temperature change amount based on the temperature change amount of the battery module 10.

In the fire monitoring mode, the controller 120 may switch to the normal mode if the temperature change amount of the battery module 10 satisfies a normal mode switching condition. In some embodiments, if the temperature change amount of the battery module 10 is less than the minimum value of the reference temperature change amount that may be changed in the fire monitoring mode, the controller 120 may determine that the temperature change amount of the battery module 10 satisfies the general mode switching condition.

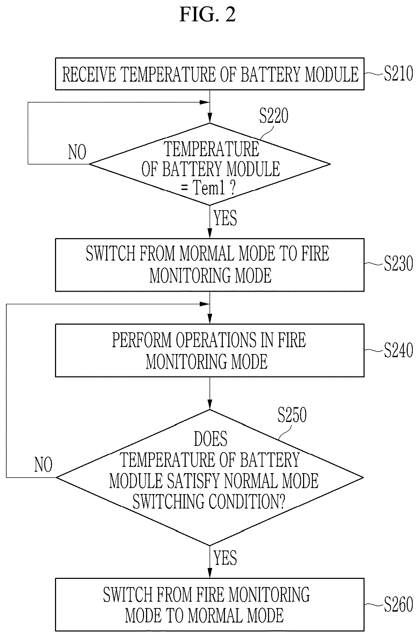

FIG. 2 is a flow chart showing a fire monitoring method.

Referring to FIG. 2, the controller 120 may receive the temperature of the battery module 10 measured through the temperature sensor 110 (S210).

The controller 120 may check whether the temperature of the battery module 10 reaches the predetermined temperature setting value Tem1.

The controller 120 may switch from the normal mode to the fire monitoring mode (S230) if the temperature of the battery module 10 reaches the predetermined temperature setting value Tem1 (S220).

The controller 120 may perform operations in fire monitoring mode (S240). The controller 120 may set a reference time and a reference temperature change amount in the fire monitoring mode based on the time at which the temperature of the battery module 10 reaches the predetermined temperature setting value Tem1 in step S220. The controller 120 may monitor the temperature of the battery module 10, compare the temperature change amount of the battery module 10 during the reference time with the reference temperature change amount, and determine the risk of fire based on the comparison result. If the temperature change amount of the battery module 10 during the reference time is less than the reference temperature change amount, the controller 120 may change the reference time and the reference temperature change amount according to the temperature change amount of the battery module 10 during the reference time, and perform fire monitoring using the changed reference time and the changed reference temperature change amount. In this manner, in the fire monitoring mode, the controller 120 may adaptively respond to the risk of fire occurrence by changing the reference time and reference temperature change amount for determining the risk of fire according to the temperature change amount of the battery module 10 during the reference time.

If the temperature of the battery module 10 satisfies the normal mode switching condition (S250) while the controller 120 is performing the operations of the fire monitoring mode, the controller 120 may switch from the fire monitoring mode to the normal mode (S260). In some embodiments, the normal mode switching condition may be set such that the temperature change amount of the battery module 10 is less than the minimum value of the reference temperature change amount that can be changed in the fire monitoring mode.

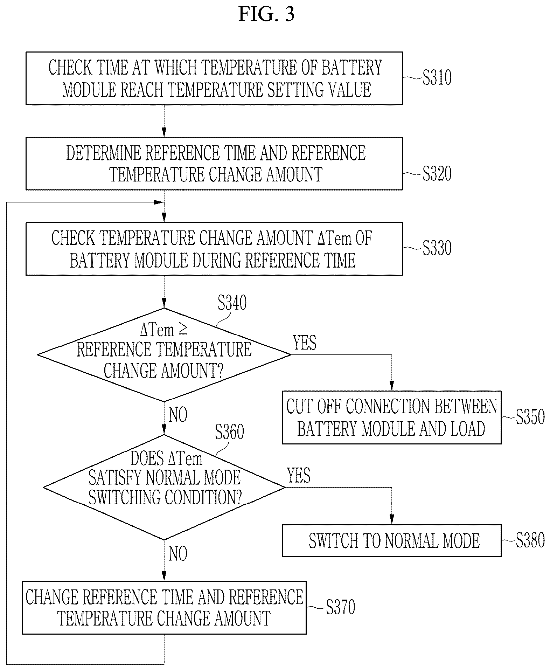

FIG. 3 is a flowchart showing an operation method of the controller in the fire monitoring mode. FIG. 3 is a flowchart illustrating steps S230, S240, S250, and S260 of FIG. 2 in more detail.

Referring to FIG. 3, if switching to fire monitoring mode, the controller 120 may check the time at which the temperature of the battery module 10 reaches the predetermined temperature setting value Tem1 (S310).

The controller 120 may determine the reference time and reference temperature change amount to be initially applied in the fire monitoring mode based on the time at which the temperature of the battery module 10 reaches the predetermined temperature setting value Tem1 (S320).

If the temperature change amount of the battery module 10 is relatively large over a short period of time, it may be determined that there is a high risk of fire. The controller 120 may determine a reference time and reference temperature change amount for determining a high fire risk based on the time at which the temperature of the battery module 10 reaches the predetermined temperature setting value Tem1 within a time range and temperature change amount range in which the fire risk is determined to be high.

According to an embodiment, the reference time and the temperature change amount may be stored in a table corresponding to the time at which the temperature of the battery module 10 reaches the temperature setting value Tem1. The table may be stored in a storage device (e.g., 130 in FIG. 1).

Table 1 shows a reference time and temperature change corresponding to the time at which the temperature of the battery module 10 reaches the predetermined temperature setting value Tem1. Here, Ta < Tb < Tc, and ΔTem1a/T1a > ΔTem1b/T1b > ΔTem1c/T1c. ΔTem1a, ΔTem1b, and ΔTem1c are the reference temperature change amounts, and T1a, T1b, and T1c are the reference times.

**(Table 1)**

| Time at which the temperature of the battery module reaches the predetermined temperature setting value | Ratio of the reference temperature change amount with respect to the reference time |
|---|---|
| Ta | ΔTem1a/T1a |
| Tb | ΔTem1b/T1b |
| Tc | ΔTem1c/T1c |

Referring to Table 1, as the time at which the temperature of the battery module 10 reaches the temperature setting value is faster, the ratio of the reference time to the reference temperature change amount may be set is greater.

For example, Ta, Tb, ΔTem1a/T1a, and ΔTem1b/T1b may be set as shown in Table 2.

**(Table 2)**

| Time at which the temperature of the battery module reaches the predetermined temperature setting value | Ratio of the reference temperature change amount with respect to the reference time |
|---|---|
| 5 minutes | 25 degrees/5 minutes (=ΔTem1a/T1a) |
| 10 minutes | 20 degrees/10 minutes (=ΔTem1b/T1b) |

Here, the temperature of the battery module 10 reaching the predetermined temperature setting value Tem1 more quickly may indicate that the temperature change amount of the battery module 10 is relatively large during the set time. On the other hand, the temperature of the battery module 10 reaching the predetermined temperature setting value Tem1 more slowly may indicate that the temperature change amount of the battery module 10 is not relatively large during the set time. According to these criteria, the reference time and reference temperature change amount to be applied initially for fire monitoring in the fire monitoring mode may be stored in the table according to the time at which the temperature of the battery module 10 reaches the predetermined temperature setting value Tem1.

**If** the reference time and reference temperature change amount to be applied initially in the fire monitoring mode are determined, the controller 120 may monitor the temperature of the battery module 10 and check the temperature change amount ΔTem of the battery module 10 during the reference time (S330).

If the temperature change amount ΔTem of the battery module 10 during the reference time is greater than the reference temperature change amount (S340), the controller 120 determines that there is a high risk of fire in the battery module 10, and may block the connection between the battery module 10 and the load to prevent ignition of the battery module 10 (S350).

If the temperature change amount ΔTem of the battery module 10 during the reference time is less than the reference temperature change amount (S340), the controller 120 may check whether the temperature change amount ΔTem of the battery module 10 during the reference time satisfies the normal mode switching condition (S360).

If the temperature change amount ΔTem of the battery module 10 during the reference time does not satisfy the normal mode switching condition, the controller 120 may change at least one of the reference time and the reference temperature change amount based on the temperature change amount ΔTem of the battery module 10 during the reference time (S370). If the temperature change amount ΔTem of the battery module 10 during the reference time is less than the reference temperature change amount, the controller 120 may increase the reference time and maintain or decrease the reference temperature change amount. If the temperature change amount ΔTem of the battery module 10 during the reference time is less than the reference temperature change amount, the controller 120 may reduce the reference temperature change amount and maintain the reference time.

According to an embodiment, the reference time and reference temperature change amount to be changed according to the temperature change amount ΔTem of the battery module 10 with respect to the reference time may be stored in a table. This table may be stored in the storage device (e.g., 130 in FIG. 1).

Table 3 shows the reference time and the reference temperature change amount according to the temperature change amount ΔTem of the battery module 10 with respect to the reference time stored in the table. Here, A > B > C, V1 > V2 > V3, third value > second value < first value, and third time > second time > first time[A1].

**(Table 3)**

| ΔTem; temperature change amount with respect to the reference time | Ratio of the reference temperature change amount with respect to the reference time to be changed | |
|---|---|---|
| A | V1 | Maintain the reference time, and reduce the reference temperature change amount by a first value |
| | | Increase the reference time by a first time, and reduce the reference temperature change amount by a first value |
| | | Increase the reference time by a first time, and maintain the reference temperature change amount |
| B | V2 | Maintain the reference time, and reduce the reference temperature change amount by a second value (second value > first value) |
| | | Increase the reference time by a second time, and reduce the reference temperature change amount by the second value (second time > first time) |
| | | Increase the reference time by the second time, and maintain the reference temperature change amount |
| C | V3 | Maintain the reference time, and reduce the reference temperature change amount by a third value (third value > second value) |
| | | Increase the reference time by a third time, and reduce the reference temperature change amount by the third value (third time > second time) |
| | | Increase the reference time by the third time, and maintain the reference temperature change amount |

As shown in Table 3, the ratio V1 of the reference temperature change amount, with respect to the reference time to be changed if the temperature change amount ΔTem of the battery module 10 with respect to the reference time is A, may be greater than the ratio V2 of the reference temperature change amount, with respect to the reference time to be changed if the temperature change amount ΔTem of the battery module 10 with respect to the reference time is B.

That is, the time and the temperature of the battery module 10 at which a fire occurs if the temperature change amount ΔTem of the battery module 10 is relatively large during the reference time may be different from the time the temperature of the battery module 10 at which a fire occurs if the temperature change amount ΔTem of the battery module 10 is not relatively large during the reference time. Therefore, if the fire risk is determined under the same conditions in a case in which the temperature change amount ΔTem of the battery module 10 during the reference time is large and in a case in which the temperature change amount ΔTem of the battery module 10 during the reference time is small, the fire risk determination may be delayed.

The controller 120 may adaptively respond to the risk of fire occurrence by setting different reference times and reference temperature change amounts for determining fire risk according to the temperature change amount ΔTem of the battery module 10 during the reference time.

**If** the temperature change amount ΔTem of the battery module 10 during the reference time is less than the reference temperature change amount, the controller 120 may calculate the temperature change amount ΔTem of the battery module 10 during the reference time, and, referring to the table shown in Table 3, may change the reference time and the reference temperature change amount in response to the temperature change amount ΔTem of the battery module 10 during the reference time. For example, if the temperature change amount ΔTem of the battery module 10 during the reference time is equal to or greater than A, the controller 120 may change the reference time and the reference temperature change amount in response to V1, and if the temperature change amount ΔTem of the battery module 10 during the reference time is less than A and equal to or greater than B, the controller 120 may change the reference time and the reference temperature change amount in response to V2. The controller 120 may change the reference time and the reference temperature change amount in response to V3 if the temperature change amount ΔTem of the battery module 10 during the reference time is less than B and equal to or greater than C.

Referring to Table 3, there may be a plurality of reference times and reference temperature changes corresponding to each of V1, V2, and V3. For example, as methods for satisfying V1, there may be a method of maintaining the reference time and decreasing the reference temperature change amount by a first value, a method of increasing the reference time by the first time and decreasing the reference temperature change amount by the first value, and a method of increasing the reference time by the first time and maintaining the reference temperature change amount. The controller 120 may select one of a plurality of reference times and reference temperature changes, and a selection standard may be set by the administrator.

If the reference time and the reference temperature change amount are changed, the controller 120 may monitor the temperature of the battery module 10 and check the temperature change amount ΔTem of the battery module 10 during the changed reference time.

If the temperature change amount ΔTem of the battery module 10 during the changed reference time does not reach the changed reference temperature change amount, the controller 120 may change the reference time and the reference temperature change amount in response to the temperature change amount ΔTem of the battery module 10 during the changed reference time by referring to the table shown in Table 3.

If the temperature change amount ΔTem of the battery module 10 during the changed reference time is equal to or greater than the changed reference temperature change amount, the controller 120 may determine that the risk of fire in the battery module 10 is high, and may cut off the connection between the battery module 10 and the load to prevent a fire of the battery module 10.

In this manner, the controller 120 may monitor the temperature of the battery module 10 in the fire monitoring mode and perform fire monitoring while changing the reference time and the reference temperature change amount based on the temperature change amount ΔTem of the battery module 10.

The controller 120 may switch from the fire monitoring mode to the normal mode if the temperature change ΔTem of the battery module 10 during the reference time satisfies the normal mode switching condition (S380). The normal mode switching condition may be set to less than C, for example.

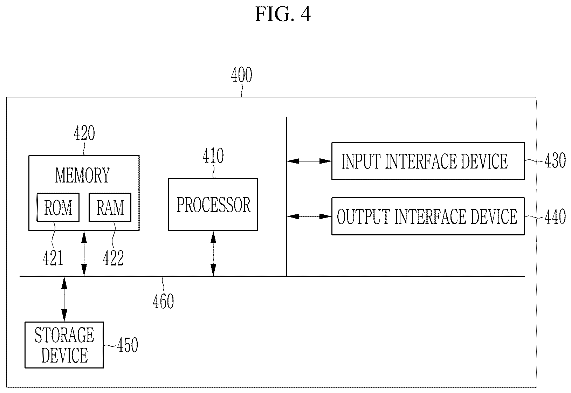

FIG. 4 is a schematic diagram showing a battery fire monitoring apparatus.

Referring to FIG. 4, the battery fire monitoring apparatus 400 may represent a computing device in which the battery fire monitoring method is implemented.

The battery fire monitoring apparatus 400 may include at least one of processor 410, a memory 420, an input interface device 430, an output interface device 440, and a storage device 450. Each component is connected to a bus (460) and can communicate with each other. Each component may be connected through an individual interface or individual bus centered on the processor 410, rather than the common bus 460.

The processor 410 may be implemented as various types such as an application processor (AP), a central processing unit (CPU), or a graphics processing unit (GPU), and may be any semiconductor device that executes a command stored in the memory 420 or storage device 450. The processor 410 may perform the battery fire monitoring operation described with reference to FIGS. 1 to 3 by executing program commands stored in at least one of the memory 420 and the storage device 450.

The memory 420 and storage device 450 may include various forms of volatile or nonvolatile storage media. For example, the memory 420 may include a read-only memory (ROM) 421 and a random access memory (RAM) 422. In an embodiment, the memory 420 may be located inside or outside the processor 410, and the memory 420 may be connected to the processor 410 via various means.

The input interface device 430 may be configured to provide data to the processor 410. In some embodiments, the input interface device 430 may provide the temperature of the battery module 10 to the processor 410.

The output interface device 440 may be configured to output data from the processor 410. In some embodiments, the output interface device 440 may output the fire monitoring results of the battery module 10.

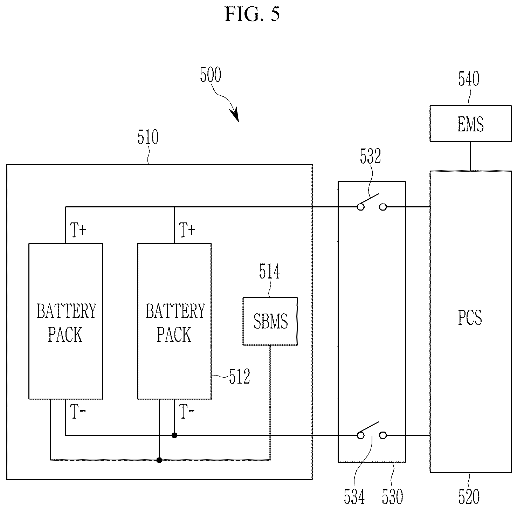

FIG. 5 is a schematic diagram illustrating an energy storage system including the battery pack illustrated in FIG. 1.

Referring to FIG. 5, the energy storage system 500 may include a battery system 510, a power conversion system (PCS) 520, a switching part 530, and an energy management system (EMS) 540.

The battery system 510 may be charged by receiving power from a grid or power generation system, and may be discharged to supply power to a load or grid.

The battery system 510 may include at least one battery pack 512 and a system BMS (SBMS) 514. For convenience, two battery packs 512 are illustrated in FIG. 5.

The battery pack 512 may be the battery pack 1 illustrated in FIG. 1. Depending on the device or system in which the battery system 510 is used, the battery pack 512 may be referred to as a battery rack.

The battery pack 512 may measure or collect status information such as current, voltages, temperatures, status of charge (SOC), status of health (SOH), depth of discharge (DOD), maximum power, and capacities of the battery packs 512 and/or battery cells, and transmit the status information of the battery packs 512 to the SBMS 514. The battery pack 512 may control charging and discharging of the battery packs 512 and perform balancing operations under the control of the SBMS 514.

The SBMS 514 may perform various control functions such as charge and discharge control and balancing of the battery packs 512 based on the status information of the battery packs 512, and may transmit control signals for controlling the battery packs 512 to the BMS of the battery packs 512.

The PCS 520 may be connected to the battery system 510. The PCS 520 may be connected to the grid, the power generation system, and the load. The PCS 520 may convert the characteristics of power between the battery system 510 and the power generation system, or between the battery system 510 and the grid. The characteristics of power may include frequency, voltage, current, alternating current (AC), or direct current (DC). For example, the PCS 520 may convert AC power supplied from the grid into DC power and supply the converted DC power to the battery system 510. For example, the PCS 520 may convert DC power supplied from the battery system 510 into AC power and supply the converted AC power to the load.

The switching part 530 may be connected between the battery system 510 and the PCS 520. The switching part 530 may include a switch 532 connected between a terminal T+ of the battery pack 512 and the PCS 520 and a switch 534 connected between a terminal T- of the battery pack 512 and the PCS 520. The switching part 530 may control the switch 532 and the switch 534.

The EMS 540 may monitor the status of the battery system 510. The EMS 540 may monitor the status of the grid, power generation system, and PCS 520. The EMS 540 may monitor the amount of power stored in the energy storage system 500. The EMS 540 may determine the total charging power and total discharging power of the energy storage system 500 based on the amount of power generated in the grid or power generation system and the amount of power stored in the energy storage system 500, and may determine the operation mode of the energy storage system 500. The operation mode may include, for example, a charge mode, a discharge mode, and an idle mode. For example, the EMS 540 may determine whether the battery system 510 is charged and/or discharged based on the difference between the amount of power delivered to the load from the battery system 510 and the amount of power generated from the grid or power generation system, and may determine the operation mode based on whether the battery system 510 is charged and/or discharged.

The EMS 540 may manage data such as total charging power, total discharging power, and operating history of the energy storage system 500. The EMS 540 is responsible for the overall operation of the energy storage system 500 and may be an operating system for controlling the energy storage system 500.

According to an embodiment, the energy storage system 500 may flexibly prevent fire occurrence by detecting abnormal temperature of the battery pack 512 by utilizing the BMS inside the battery pack 512.

At least a portion of the battery fire monitoring method may be implemented as a program or software running on a computing device, and the program or software may be stored on a computer-readable medium.

At least some of the battery fire monitoring methods may be implemented in hardware that can be electrically connected to a computing device.

According to an embodiment, by performing fire monitoring while changing a reference time and a reference temperature change amount according to a temperature change amount of the battery module, it is possible to adaptively respond to the risk of fire occurring due to various temperature changes of the battery module.

According to various embodiments, the temperature change amount of the battery module is a change amount (also referred as to change amplitude) of the temperature of the battery module.

According to various embodiments, the reference time is a time interval (also referred as to reference time interval).

According to various embodiments, a predetermined and/or stored item (e.g., temperature setting value, the first table and/or second table) may be stored by a storage medium (e.g., memory or storage device) and/or stored as preset. For example, changing a preset may require higher access rights (e.g., writing rights) than reading the preset, e.g., implemented by an access-control system and/or access-control list.

According to various embodiments, a change (e.g., temperature change amount) during a reference time may be determined as the change per reference time, e.g., determined by the derivative of the change with respect to the time averaged over the reference time and/or by the change divided by the time (e.g., ΔTem1a/T1a).

According to various embodiments, a method (e.g., implemented by a controller) may include: determining a temperature of a battery module, e.g., using a temperature sensor; comparing a change amount of the temperature of the battery module with a reference temperature change amount regarding a reference time, if the temperature of the battery module reaches a predetermined temperature setting value (e.g., used as threshold); changing the reference time and/or the reference temperature change amount based on a result of the comparing, e.g., if the temperature change amount is less than the reference temperature change amount; and/or disconnecting a connection between the battery module and a load, based on a result of the comparing, e.g., if the temperature change amount is equal to or greater than the reference temperature change amount.

According to various embodiments, the controller is configured to disconnect a connection between the battery module and a load via a switch, which is controlled by the controller. An exemplarily implementation of the switch includes a transistor, a relay and/or a more complex circuit.

According to various embodiments, the controller is configured to read out the temperature sensor, which is configured to sense the temperature of the battery module.

Embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present disclosure.

## Claims

1. A method of monitoring a fire in a battery comprising:
obtaining a temperature of a battery module (10);
comparing a temperature change amount of the battery module (10) with a reference temperature change amount during a reference time, if the temperature of the battery module (10) reaches a predetermined temperature setting value;
changing the reference time or the reference temperature change amount, if the temperature change amount is less than the reference temperature change amount; and
disconnecting a connection between the battery module (10) and a load, if the temperature change amount is equal to or greater than the reference temperature change amount.

2. The method as claimed in claim 1, wherein the comparing comprises setting the reference time and the reference temperature change amount according to a time the temperature of the battery module (10) reaches the predetermined temperature setting value.

3. The method as claimed in claim 2, wherein the setting comprises setting the reference temperature change amount with respect to the reference time if the time at which the temperature of the battery module (10) reaches the temperature setting value is a first time, to be greater than the reference temperature change amount with respect to the reference if the time at which the temperature of the battery module (10) reaches the temperature setting value is a second time longer than the first time.

4. The method as claimed in claim 2 or 3, wherein the setting comprises determining the reference time and the reference temperature change amount by referring to a first table (2, 3) storing the reference time and the temperature change amount corresponding to each time the temperature of the battery module (10) reaches the predetermined temperature setting value, and
wherein the reference temperature change amount with respect to the reference time stored in the first table (2, 3) is set to be larger the shorter the time at which the temperature of the battery module (10) reaches the temperature setting value.

5. The method as claimed in one of claims 1 to 4, wherein the changing comprises determining the reference time and the reference temperature change amount based on the temperature change amount of the battery module (10) during the reference time.

6. The method as claimed in claim 5, wherein the determining comprises determining the reference time and the reference temperature change amount by referring to a second table (2, 3) storing the reference time and the reference temperature change amount corresponding to each temperature change amount of the battery module (10) during the reference time, and
wherein the reference temperature change amount with respect to the reference time in the second table (2, 3) is set to be larger, as the temperature change amount of the battery module (10) with respect to the reference time is larger.

7. The method as claimed in claim 5 or 6, wherein the determining comprises increasing the reference time by a set time or decreasing the reference temperature change amount by a set value based on the temperature change amount of the battery module (10) during the reference time.

8. An apparatus for monitoring a fire in a battery comprising:
a temperature sensor (110) configured to measure a temperature of a battery module (10); and
a controller (120) configured to perform fire monitoring, wherein the fire monitoring compares a temperature change amount of the battery module (10) during a reference time with a reference temperature change amount, if the temperature of the battery module (10) reaches a predetermined temperature setting value, and wherein the fire monitoring changes the reference time or the reference temperature change amount based on the temperature change amount during the reference time.

9. The apparatus as claimed in claim 8, wherein the controller (120) is configured to set the reference time and the reference temperature change amount based on a time the temperature of the battery module (10) reaches the predetermined temperature setting value.

10. The apparatus as claimed in claim 9, further comprising:
a storage device (130, 450) comprising a first table (2, 3) storing the reference time and the temperature change amount corresponding to each time the temperature of the battery module (10) reaches the predetermined temperature setting value,
wherein the controller (120) is configured to set the reference time and the reference temperature change amount from the time at which the temperature of the battery module (10) reaches the predetermined temperature setting value by referring to the first table (2, 3).

11. The apparatus as claimed in claim 10, wherein the reference temperature change amount with respect to the reference time stored in the first table (2, 3) inversely corresponds to the time at which the temperature of the battery module (10) reaches the predetermined temperature setting value.

12. The apparatus as claimed in on of claims 8 to 11, wherein the controller (120) is configured to change the reference time or the reference temperature change amount based on the temperature change amount of the battery module (10) during the reference time, if the temperature change amount of the battery module (10) during the reference time is less than the reference temperature change amount.

13. The apparatus as claimed in claim 12, further comprising:
a storage device (130, 450) comprising a second table (2, 3) storing the reference time and the reference temperature change amount corresponding to each temperature change amount of the battery module (10) during the reference time,
wherein the controller (120) is configured to change the reference time or the reference temperature change amount corresponding to the temperature change amount of the battery module (10) during the reference time by referring to the second table (2, 3).

14. The apparatus as claimed in claim 13, wherein the reference temperature change amount with respect to the reference time of the second table (2, 3) corresponds to the temperature change amount of the battery module (10) with respect to the reference time.

15. The apparatus as claimed in one of claims 8 to 14, wherein the controller (120) is configured to disconnect a connection between the battery module (10) and a load, if the temperature change amount of the battery module (10) during the reference time is equal to or greater than the reference temperature change amount.
